Europäisches Patentamt

European Patent Office

Office européen des brevets

(19)

(11) Veröffentlichungsnummer : **0 074 517
B1**

(12) EUROPÄISCHE PATENTSCHRIFT

(45) Veröffentlichungstag der Patentschrift :
**30.07.86**

(21) Anmeldenummer : **82107663.5**

(22) Anmeldetag : **21.08.82**

(51) Int. Cl.⁴ : **B 23 K 37/04**, B 23 Q 3/00,
B 23 Q 7/02

(54) **Spann- und Wendevorrichtung.**

(30) Priorität : **15.09.81 DE 3136474**

(43) Veröffentlichungstag der Anmeldung :
**23.03.83 Patentblatt 83/12**

(45) Bekanntmachung des Hinweises auf die Patenterteilung : **30.07.86 Patentblatt 86/31**

(84) Benannte Vertragsstaaten :
**FR GB IT NL SE**

(56) Entgegenhaltungen :
**DE-A- 2 413 024
DE-B- 1 172 618
GB-A- 2 059 842
TOOLING & PRODUCTION, Band 48, Nr. 5, August
1982, Solon "Part positioners for robotic welding
systems", Seite 124**

(73) Patentinhaber : **Severt, Wilhelm
Venn Diek 21
D-4426 Vreden (DE)**

(72) Erfinder : **Severt, Wilhelm
Venn Diek 21
D-4426 Vreden (DE)**

(74) Vertreter : **Busse & Busse Patentanwälte
Postfach 1226 Grosshandelsring 6
D-4500 Osnabrück (DE)**

## Beschreibung

Die Erfindung betrifft eine Spann- und Wendevorrichtung nach dem Oberbegriff des Anspruchs 1.

Spann- und Wendevorrichtungen dieser Art ergeben sich aus bekannten Entwicklungen des Anmelders (GB-A-2 059 842), mit denen es gelungen ist, die Handhabung großer Werkstücke insbesondere für Schweißarbeiten zu verbessern und zu erleichtern und dabei insbesondere auch die Zugänglichkeit zu großen Werkstücken und die Ausrichtung solcher Werkstücke auf bevorzugte Lagen zu ermöglichen, wie etwa die Wannenlage beim Schweißen. Diese Entwicklungen sind allerdings hinsichtlich Aufnahmefähigkeit, Baugröße und Präzision an Grenzen gestoßen und haben damit nicht nur die Leistungsfähigkeit schlechthin, sondern insbesondere auch den Durchbruch zu stärkerer Automatisierung verhindert.

Aufgabe der Erfindung ist es dementsprechend, eine Spann- und Wendevorrichtung der eingangs bezeichneten Art so auszugestalten, daß sie es erlaubt, große Werkstücklasten mit baulich vertretbarem Aufwand und zugleich mit der Möglichkeit einer exakten und feinfühligen Einstellung der Werkstücklagen aufzunehmen, so daß schwere und ausladende Werkstücke auch in automatisierten Arbeitsverfahren wie etwa mittels rechnergesteuerter Positionierung behandelt werden können.

Diese Aufgabe wird mit den Merkmalen des Anspruchs 1 gelöst. Es wurde nämlich gefunden, daß in den Drehgelenken, und hierbei zunächst einmal in dem Drehgelenk zwischen Gestell und Träger, eine besondere Schwachstelle des Lagerungssystems liegt. Die herkömmliche Lagerung über zwei in einem achsialen Abstand voneinander angeordnete (Wellen-) Lager verlangte mit wachsenden Lasten immer größere Abstände und/oder Lager-Tragfähigkeiten, wobei aber die Präzisionsanforderungen und die Schwingungsstabilität des Systems immer weniger kontrollierbar wurden. Diese Schwingungsprobleme betrafen den Arm bei seiner Biegebeanspruchung wie auch hinsichtlich seiner Torsionsbeanspruchung, wobei letztere sowohl die Feinfühligkeit der Einstellung wie auch den Ablauf des Einschwingvorgangs unakzeptabel machte.

Die Probleme bei der Lagerung der Spannplatte ergaben sich dabei grundsätzlich entsprechend, wenn auch lageabhängig und graduell geringer.

Beim Übergang zu der nun vorgesehenen Art der Lagerung in nur einer Lagerebene großen Durchmessers führt zu baulichen Konzepten, die es erlauben, das Gestell sehr viel kompakter, insbesondere auch in Längsrichtung des Trägers kürzer zu halten. In baulicher Hinsicht ergibt sich an der Spannplatte neben einer größeren Kompaktheit auch noch die Gestaltungsmöglichkeit, mit einer Ringform der Spannplatte die Auflagefläche zu durchbrechen und sonst schwer oder gar nicht zugängliche Bereiche am Werkstück erreichbar zu machen. Im engen Wechselspiel mit der Kompaktheit ergibt sich die Möglichkeit der baulichen Versteifung zur Beseitigung von Schwingungsempfindlichkeit des Systems und auch — mit wachsendem Lagerdurchmesser — die Möglichkeit, Auswirkungen des Lagerspiels in axialer und auch radialer Richtung einschneidend zu reduzieren.

Dabei bietet sich der durch das Lager gegebene große Durchmesser gleichzeitig für die Dreheinstellung und -blockierung an, um hohe Feinfühligkeit und Präzision zu erzielen. So kannssowohl der trägerseitige Teil des Trägerlagers am Gestell wie auch der plattenseitige Teil des Plattenlagers am Trägerende mit einem Zahnkranz verbunden sein, dessen großer Radius Genauigkeit und Feinfühligkeit ergibt, wenn ein Zahnrad, Schneckenrad od. dgl. von seiten des Gestells bzw. Trägers einwirkt.

Diese Präzision bringt auch den Durchbruch zur Anwendung automatisierter Einstellverfahren, insbesondere in Verbindung mit Positionsregelkreisen und/oder digitalen Steuerungen.

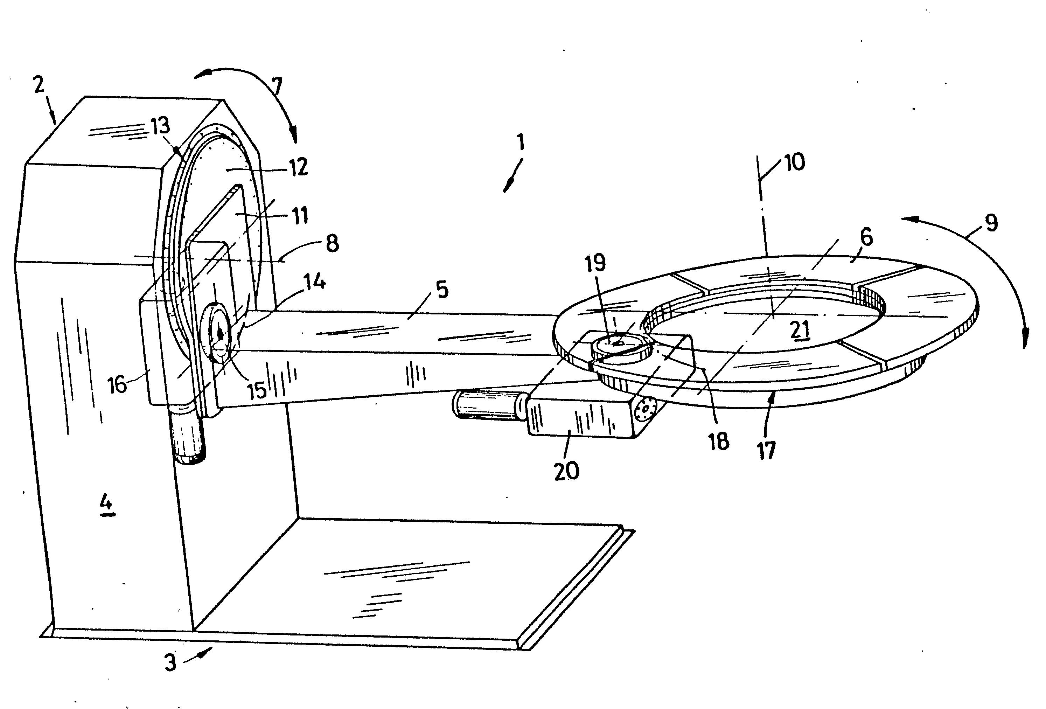

Weitere Ausführungsarten der Erfindung ergeben sich aus den Ansprüchen 2-6. In der nachfolgenden Beschreibung wird ein Ausführungsbeispiel des Gegenstands der Erfindung anhand einer Zeichnung näher erläutert. Die einzige Figur der Zeichnung zeigt eine Spann- und Wendevorrichtung in vereinfachter, perspektivischer Ansicht.

Die in der Zeichnung dargestellte, insgesamt mit 1 bezeichnete Spann- und Wendevorrichtung umfaßt ein insgesamt mit 2 bezeichnetes, über einen plattenartig vorgestreckten Fuß 3 auf dem Boden abgestütztes Gestell, das sich nach oben mit einem Gestellgehäuse 4 kastenartiger Ausbildung erstreckt. An dem Gestell 2 ist ein Träger 5 in einseitiger Lagerung unbeschränkt drehbeweglich befestigt und am Ende dieses Trägers 5 ist eine Spannplatte 6 unbeschränkt drehbeweglich (gegenüber dem Träger 5) angeordnet. Ein Pfeil 7 zeigt die Drehrichtung des Arms 5 bezüglich einer Drehachse 8 an, desgleichen verdeutlicht ein Pfeil 9 die Drehrichtung der Spannplatte 6 bezüglich einer in der dargestellten horizontalen Stellung der Spannplatte vertikalen Hochachse 10. Ein Werkstück läßt sich mit Hilfe dieser beiden rotatorischen Freiheitsgrade grundsätzlich in jede beliebige Winkellage gegenüber der Bodenebene drehen, so daß es insbesondere auch für Schweißarbeiten möglich ist, die bevorzugte Wannenlage einzustellen.

Ein weiterer, sehr wesentlicher Freiheitsgrad ist die Möglichkeit einer translatorischen Verlagerung des Arms 5 zu sich selbst. Wie aus der Zeichnung ersichtlich, ist der Arm 5 gegenüber seiner Drehachse 8 versetzt angeordnet und dieser Versatz ist einstellbar mittels einer Flanschplatte 11, die flach an einer Gegenplatte 12 anliegt und in veränderbaren Stellungen gegenüber dieser festlegbar ist. Damit ist ein Auswuchten schwerer Werkstücke ermöglicht, deren Schwerpunkt (unter Einrechnung des Tragarms und der Spannplatte) man auf die Drehachse 8 ausrichtenkann. Damit läßt sich eine momentenneutrale Drehlagerung für den belasteten Träger 5 erzielen. Der Versatz mittels der Flanschplatten 11, 12 kann aber auch bei besonders sperrigen Werkstücken dazu verwandt werden, eine ausreichende Bodenfreiheit beim Drehen um die Achse 8 sicherzustellen. Schließlich findet der Versatzarm auch eine Nutzung bei kreisbogenförmigen Bearbeitungen, etwa bei kreisbogenförmigen Schweißnähten, zu denen das Werkstück mit dem Träger 5 um die Achse 8 gedreht wird.

Es versteht sich, daß die vorgenannten Probleme des Auswuchtens und der Bewegungsfreiheiten nur bei großen und schweren Werkstücken von Interesse sind, wie auch die beschriebene Grundkonstruktion ihre spezielle Bedeutung für solche Anwendungsfälle besitzt. Solche Fälle sind aber regelmäßig auch mit äußerst hohen Anforderungen an die Präzision verknüpft und überdies stellt die Praxis immer weitergehende Anforderungen an eine arbeitssparende, leichte und möglichst auch selbsttätig durchführbare Positionierung der Werkstücke. Diesen Anforderungen waren bisher Grenzen in der Möglichkeit der Feineinstellung wie auch in der Möglichkeit einer exakten und schwingungsfreien Lageeinhaltung gesetzt. Wie sich gezeigt hat, waren hier die Wellenlagerungen und das bisherige Grundkonzept eines achsnahen Lagers und Antriebs maßgebliche Ursache der Schwierigkeiten.

Die dargestellte Ausführungsform besitzt ein Lager, welches sich nicht nach Art einer Wellenlagerung mit achsialversetzten Abstützungen der Momentenbelastung erwehrt, sondern das die Belastung über ein Ringlager großen Durchmessers abfängt. Ein nicht im einzelnen dargestelltes Ringlager bei 13 stützt die kreisförmig ausgebildete Flanschplatte 12 und damit den Träger 5 gegenüber dem Gestell 2. Konkret ist hier unter der Flanschplatte 12 eine Großwälzlagerung etwa gleichen Durchmessers-eingebaut, deren restliches Lagerspiel infolge des großen Durchmessers nur zu einem geringen Spiel bei Querbelastungen des Trägers 5 im Bereich der Spannplatte 6 führt. Mit dem trägerseitigen Teil des Ringlagers 13 und mit der Flanschplatte 12 ist aber auch ein Zahnkranz 14 (nur mit dem Teilerkreis angedeutet) verbunden, der eine Innenverzahnung bildet. In diese Innenverzahnung greift ein Ritzel 15 ein, das mit einem Schneckenantrieb 16 mit gestellseitiger Abstützung verbunden ist. Das bei Zahnradgetrieben nicht völlig auszuräumende Flankenspiel wird durch den großen Durchmesser des Zahnrads auf ein relativ kleines Winkelspiel reduziert. Überdies führt der große Durchmesser des Zahnrads zu entsprechend reduzierten Momentenbelastungen im Eingriffsbereich des Ritzels 15, so daß damit von der Lagerung und vom Antrieb her der Durchbruch zu einer feinfühligen und präzisen Einstellbarkeit des Trägers 5 gelungen ist. Die Ausbildung des Antriebs 16 als Schneckengetriebe verleiht diesem im übrigen selbsthemmende Eigenschaften, so daß hier von einer zusätzlichen Bremse abgesehen werden kann.

In baulicher Hinsicht ergibt sich eine kompakte und raumsparende Anordnung und gleichzeitig auch eine elegante Einbeziehung der Flanschplatten 11, 12 in die Konstruktion.

Auch die Lagerung zwischen Spannplatte 6 und Träger 5 ist bei 17 durch ein Ringlager großen Durchmessers, vorzugsweise ein Großwälzlager erstellt, wobei sich zunächst wieder die besonderen Vorteile der kompakten, aber präzisen Lagerung ergeben. Auch hier ist das Ringlager — spannplattenseitig — mit einem Zahnkranz 18 verbunden, der mit Außenverzahnung den Eingriff eines Ritzels 19 ermöglicht, welches Teil eines am Träger 5 gelagerten Schneckentriebes 20 ist. Dank des großen Durchmessers dieses Antriebes ergeben sich hier auch wieder geringe spielbedingte Fehlereinflüsse und geringe Antriebsbelastungen mit entsprechenden Vorteilen hinsichtlich der Auslegung wie auch hinsichtlich positionsverfälschender Verformungen.

Das Ringlager 17 ermöglicht auch hier wieder eine flache und damit raumsparende Bauweise. Darüber hinaus eröffnet es die Möglichkeit, die Spannplatte 6 ringförmig mit einem freien Innenraum 21 zu gestalten, so daß das Werkstück auch von unten bzw. von der Unterseite der Spannplatte her weitgehend zugänglich ist.

Der mit den Ringlagern erzielte Vorteil hoher Feinfühligkeit und Präzision der Einstellung macht den Weg frei für den Einsatz von Positionsregelungen und/oder numerischen Steuerungen. Das vorliegende Ausführungsbeispiel sieht beides vor, ohne daß die entsprechenden, an sich bekannten gerätetechnischen Einrichtungen hierzu dargestellt wären. Die beiden Schneckenantriebe 16, 20 sind abtriebsseitig mit einem digitalen Weggeber, hier einem inkrementalen optischen Weggeber, ausgestattet, der die Winkellage der Spannplatte 6 gegenüber dem Träger 5 bzw. des Trägers 5 gegenüber dem Gestell 2 an einen Rechner im Gestell 2 rückmeldet. Es versteht sich, daß die Positionsgeber auch etwa mit den Zahnkränzen 13 bzw. 17 verbunden sein könnten, um auch noch die Übertragung zwischen Antrieb und angetriebenem Element in die Positionsmeldung einzubeziehen. Es hat sich jedoch bei der hohen Präzision und Steifigkeit der Ringlager und großen Zahnkränze als völlig ausreichen erwiesen, die Position am Antrieb abzugreifen. Die gemeldete Ist-Position wird in der üblichen Weise mit einer eintastbaren oder durch Lochstreifen, Band od. dgl. zahlenmäßig vorgebbaren Soll-Position verglichen, um eine Regelabweichung zu ermitteln, die dann einem unterlagerten Drehzahl-Regelkreis für den jeweiligen Schneckenantrieb 16 bzw. 20 eingegeben wird. Der von dem Drehzahlregelkreis ausgesteuerte Antrieb führt also die Ist-Position auf die Soll-Position, ohne daß hier noch Steuervorgänge von Hand auszuführen wären, die bei hochgenauen Vorgaben und insbesondere beim Ein-/Ausschaltbetrieb von Stellmotoren zeitraubend und lästig sein können.

## Patentansprüche

1. Mehrachsig verschwenkbare Spann- und Wendevorrichtung (1) für die Bearbeitung schwerer Werkstücke, insbesondere für deren Schweißbearbeitung, mit einer in ihrer Plattenebene um eine Hochachse uneingeschränkt von einem Verstellantrieb (20) drehbaren Spannplatte (6), einem die Spannplatte (6) abstützenden, von einem Verstellantrieb (16) um eine waagerechte Längsachse drehbaren Träger (5) und einem den Träger (5) zumindest einenends lagernden und gegenüber dem Boden abstützenden Gestell (2), wobei der Träger (5) ein Paar gegeneinander verschiebbarer und aufeinander festlegbarer Flanschplatten (11, 12) zur Einstellung eines Achsversatzes am Träger (5) aufweist, dadurch gekennzeichnet, daß der Träger (5) gegenüber dem Gestell (2) in lediglich einer quer zur Längsachse ausgerichteten Lagerebene über ein Ringlager (13) abgestützt ist, dessen beweglicher Ringteil mit einem Zahnkranz (14) entsprechend großen Durchmessers verbunden ist, in den der mit einem Drehgeber für die Position des Trägers (5) ausgestattete Verstellantrieb (16) mit einem Ritzel (15) eingreift, und dessen beweglicher Ringteil weiter die gestellseitige Flanschplatte (12) als direkt angeschlossene Scheibe trägt, und daß die Spannplatte (6) gegenüber dem Träger (5) in lediglich einer quer zur Hochachse (10) ausgerichteten Lagerebene über ein Ringlager (17) abgestützt ist, dessen beweglicher Ringteil mit einem Zahnkranz (18) entsprechend großen Durchmessers verbunden ist, in den der mit einem Drehgeber ausgestattete Verstellantrieb (20) mit einem Ritzel (19) eingreift.

2. Spann- und Wendevorrichtung nach Anspruch 1, dadurch gekennzeichnet, daß das Ringlager (17) für die Spannplatte (6) und dessen Abstützung am Arm einen freien Innenraum (21) bildet und daß die Spannplatte (6) in Form einer Ringscheibe ausgebildet ist.

3. Spann- und Wendevorrichtung nach Anspruch 1 oder 2, dadurch gekennzeichnet, daß die Ringlager (13, 17) als Großwälzlager ausgebildet sind.

4. Spann- und Wendevorrichtung nach Ansprüche 1, 2 oder 3, dadurch gekennzeichnet, daß die Verstellantriebe (16, 20) ein Schneckengetriebe aufweisen.

5. Spann- und Wendevorrichtung nach einem der Ansprüche 1 bis 4, dadurch gekennzeichnet, daß die Drehgeber als digitale Drehgeber ausgebildet sind.

6. Spann- und Wendevorrichtung nach Anspruch 5, dadurch gekennzeichnet, daß jeder der Drehgeber und der zugehörige Verstellantrieb mit einem Digitalrechner zu einem Positions-Regelkreis verbunden sind.

## Claims

1. A multiaxially pivotable work-holding and turning-over device (1) for the working of heavy workpieces, particularly for welding them, having a clamping plate (6) which can be rotated, without restriction, by an adjusting drive (20) about a vertical axis in its plate plane, a support (5) which supports the clamping plate (6) and can be rotated by an adjusting drive (16) about a horizontal longitudinal axis, and a stand (2) carrying the support (5) at least at one end and supporting it in relation to the floor, the support (5) comprising a pair of flange plates (11, 12) which are displaceable in relation to one another and can be located on one another to adjust an offsetting of the axis at the support (5), characterised in that the support (5) is supported in relation to the stand (2) in only one bearing plane aligned transversely to the longitudinal axis, through an annular bearing (13), the movable annular portion of which is connected to a toothed rim (14) of correspondingly large diameter in which the adjusting drive (16), equipped with a rotation pick-up for the position of the support (5), engages with a pinion (15), and the movable annular portion of which further carries the flange plate (12) at the stand side as a directly attached disc, and in that the clamping plate (6) is supported in relation to the support (5) in only one bearing plane aligned transversely to the vertical axis (10), through an annular bearing (17), the movable annular portion of which is connected to a toothed rim (18) of a correspondingly large diameter in which the adjusting drive (20), equipped with a rotation pick-up engages with a pinion (19).

2. A work-holding and turning-over device as claimed in claim 1, characterised in that the annular bearing (17) for the clamping plate (6) and its supporting means on the arm forms a free interior space (21) and in that the clamping plate (6) is constructed in the form of an annular disc.

3. A work-holding and turning-over device as claimed in claim 1 or 2, characterised in that the annular bearings (13, 17) are constructed in the form of large rolling bearings.

4. A work-holding and turning-over device as claimed in claim 1, 2 or 3, characterised in that the adjusting drives (16, 20) comprise a worm drive.

5. A work-holding and turning-over device as claimed in any one of the claims 1 to 4, characterised in that the rotation pick-ups are constructed in the form of digital rotation pick-ups.

6. A work-holding and turning-over device as claimed in claim 5, characterised in that each of the rotation pick-ups and the associated adjusting drive is connected to a digital computer to form a position control loop.

## Revendications

1. Dispositif de serrage et de retournement (1) basculant autour de plusieurs axes pour l'usinage de pièces lourdes notamment pour le soudage des pièces, comportant une plaque de serrage (6) susceptible d'être tournée dans son plan de plaque autour d'un axe vertical, de façon limitée à l'aide d'un moyen d'entraînement de réglage (20), d'un bras de support (6) tournant autour de son axe longitudinal par l'intermédiaire d'un moyen d'entraînement de réglage (16), et servant d'appui à la plaque de serrage (6) ainsi que d'un bâti (2) recevant le bras de support (5) au moins par une extrémité et l'appuyant sur le sol, le bras de support (5) comportant une paire de plaques à bride (11, 12) coulissantes l'une par rapport à l'autre et susceptibles d'être bloquées l'une par rapport à l'autre pour régler un décalage axial du bras de support (5), caractérisé en ce que le bras de support (5) est uniquement appuyé sur le bâti (2) dans un plan de montage transversal à l'axe longitudinal par l'intermédiaire d'un palier annulaire (13), dont la partie annulaire mobile est reliée à une couronne dentée (14) de grand diamètre correspondant, avec lequel coopère par un pignon (15) un moyen d'entraînement de réglage (16) muni d'un capteur de rotation pour la position du bras de support (5), et dont la partie annulaire mobile porte en outre la plaque à bride 12 située du côté du bâti comme disque relié directement, et en ce que la plaque de serrage (6) est uniquement appuyée par rapport au bras de support (5) dans un plan de palier dirigé transversalement à l'axe vertical (10), par l'intermédiaire d'un palier annulaire (17) dont la partie annulaire mobile est reliée à une couronne dentée (18) de grand diamètre correspondant avec lequel coopère un pignon (19) du moyen d'entraînement de réglage (10) équipé d'un capteur de rotation.

2. Dispositif de serrage et de retournement selon la revendication 1, caractérisé en ce que le palier annulaire (17) de la plaque de serrage (6) et son appui sur le bras forment un volume intérieur libre (21) et en ce que la plaque de serrage (6) est en forme de disque annulaire.

3. Dispositif de serrage et de retournement selon la revendication 1 ou la revendication 2, caractérisé en ce que les paliers annulaires (13, 17) sont réalisés sous la forme de paliers à roulement de grand diamètre.

4. Dispositif de serrage et de retournement selon les revendications 1, 2 ou 3, caractérisé en ce que les moyens d'entraînement de réglage (13, 20) comportent une transmission à vis.

5. Dispositif de serrage et de retournement selon l'une quelconque des revendications 1 à 4, caractérisé en ce que les capteurs de rotation sont des capteurs de rotation numériques.

6. Dispositif de serrage et de retournement selon la revendication 5, caractérisé en ce que chaque capteur de rotation et le moyen d'entraînement de réglage correspondants sont reliés à un calculateur numérique pour former un circuit de régulation de position.

0 074 517